# EUROPEAN PATENT APPLICATION

(11) **EP 3 530 491 A1**
(43) Date of publication of application: **28.08.2019**
(21) Application number: 18206704.1
(22) Date of filing: 16.11.2018
(51) Int. Cl.: B60C 13/02, B60C 11/01

(54) **PNEUMATIC TIRE**

(30) Priority: 26.02.2018 KR 20180023172
(71) Applicant: Hankook Tire Co., Ltd., Seoul 06133 (KR)
(72) Inventor: LEE, Sung Chul, 35246 Daejeon (KR); CHUN, Eun Chang, 34119 Daejeon (KR); CHOI, Jung Hee, 05504 Seoul (KR); HONG, Chang Hyo, 35334 Daejeon (KR)
(74) Representative: Pfenning, Meinig & Partner mbB

(57) **Abstract**

The present invention relates to a pneumatic tire, and more particularly, to a pneumatic tire having an improved decoupling groove in a shoulder. The pneumatic tire including a tread (100), a sidewall (200), and a bead (300) includes one or more side ring decoupling grooves (400) formed along the circumference of the tire at an upper portion of the sidewall (200), and the side ring decoupling grooves (400) are formed in a direction parallel with the ground coming into contact with the tire while the tire runs.

## Description

### BACKGROUND OF THE INVENTION

### Field of the Invention

The present invention relates to a pneumatic tire, and more particularly, to a pneumatic tire having an improved decoupling groove in a shoulder.

### Description of the Related Art

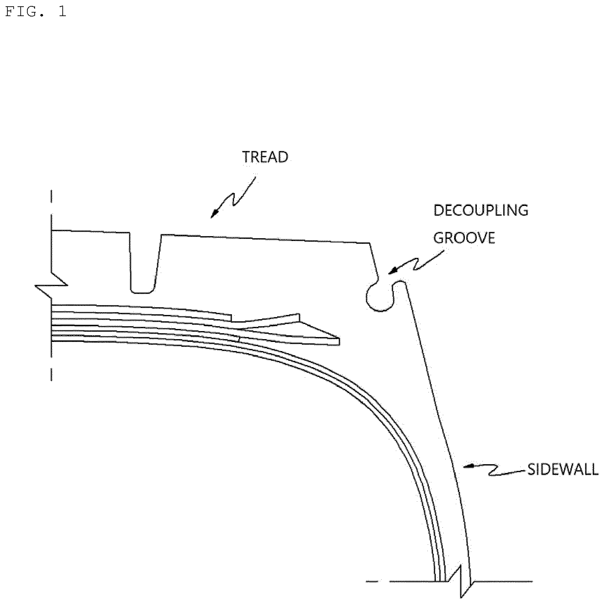

Heavy-duty tires require durability and wear performance represented as mileage. This mileage performance is again classified into two parts: the first is absolute wear performance and the second is abnormal wear resistance performance. There are many techniques for improving the abnormal wear resistance performance, but a typical technique of them is to install a decoupling groove, which is an abnormal wear prevention mechanism, at a shoulder end, as illustrated in FIG. 1.

In particular, the decoupling groove is widely employed for tires running at high speed/for long distance. The principle of the decoupling groove is to form a sacrificial rib separated by the decoupling groove at the shoulder end, to concentrate the frictional energy generated in the outermost rib on the intentionally separated sacrificial rib to accelerate the wear of the sacrificial rib and suppress the wear of the outermost rib, and to prevent irregular wear from spreading to the main rib when the irregular wear occurs on the sacrificial rib.

Related arts will be described below. The reference numerals described in the following related arts are irrelevant to the present invention.

Korean Patent No. 10-1053904, entitled "Heavy-duty Vehicle Tire with Decoupling Groove", relates to a heavy-duty vehicle tire, and more particularly, to a tire in which a decoupling groove is installed in a shoulder portion. Korean Patent No. 10-1053904 discloses a tire in which a decoupling groove is installed at a tread corner and the angle (a) formed by the depth direction of the decoupling groove 5 and the tread ground plane is 97 to 100 degrees. This technology allows a sacrificial rib to be formed outside the decoupling groove to protect an inner tread edge rib while allowing a sufficiently deep decoupling groove to be installed between the sacrificial rib and the tread edge rib to fully block the abnormal wear of the sacrificial rib from transferring to the tread edge rib, allows the sufficiently deep decoupling groove to block the vibration transmission of a sidewall, and allows the decoupling groove to be installed close to a belt edge to increase an effect of dissipating heat from the belt edge.

US 2009/0065115 A1 is a patent related to the Continental's decoupling groove. The Continental patent has a circumferential decoupling rib. US 2009/0065115 A1 has an effect of suppressing irregular wear by a shoulder-side rib bearing more weight.

US 8074690 B2 (US 2010/0116390 A1) is a technology applied by the Goodyear Tire & Rubber Company and aims to prevent cracks from growing from a side wall to a tread. US 8074690 B2 discloses a rib having a rounded edge to reduce irregular wear and adopts a decoupling groove. US 8074690 B2 also discloses a shoulder-side rib providing a protection function.

EP 0 996 551 B1 is a patent related to the Michelin's decoupling groove. The decoupling groove of EP 0 996 551 B1 differs from those of the related arts in shape and length, and increases wear reduction and lateral safety by the shoulder rib of this shape.

### Citation List

### Patent Literature

Patent Literature 1: Korean Patent No. 10-1053904 (Date of Publication: August 04, 2011)
Patent Literature 2: US 2009/0065115 A1 (Date of Publication: March 12, 2009)
Patent Literature 3: US 8074690 B2 (US 2010/0116390 A1) (Date of Publication: December 13, 2011)
Patent Literature 4: EP 0 996 551 B1 (Date of Publication: January 21, 1999)

### SUMMARY OF THE INVENTION

It is an object of the present invention to provide a pneumatic tire that improves heat dissipation performance of a tread end, has enhanced durability, and simultaneously improves a tread life by relieving the contact pressure applied to a shoulder.

The present invention is not limited to the above-mentioned object, and other objects of the present invention can be clearly understood by those skilled in the art to which the present invention pertains from the following description.

To accomplish the object described above, an aspect of the present invention provides a pneumatic tire including a tread (100), a sidewall (200), and a bead (300). The pneumatic tire includes one or more side ring decoupling grooves (400) formed along the circumference of the tire at an upper portion of the sidewall (200), and the side ring decoupling grooves (400) are formed in a direction parallel with the ground.

### BRIEF DESCRIPTION OF THE DRAWINGS

FIG. 1 is a cross-sectional view illustrating a main portion for explaining a conventional decoupling groove.
FIG. 2 is a perspective view illustrating a main portion of a pneumatic tire according to an embodiment of the present invention.
FIG. 3 is a cross-sectional view illustrating the main portion of the pneumatic tire according to the embodiment of the present invention.
FIG. 4 is a cross-sectional view illustrating a main portion in an implementation example to which a shoulder decoupling groove is additionally applied.

### DETAILED DESCRIPTION OF THE PREFERRED EMBODIMENTS

Reference will now be made in detail to exemplary embodiments of the present invention, examples of which are illustrated in the accompanying drawings. The present invention may, however, be embodied in different forms and should not be construed as limited to the embodiments set forth herein. For clear explanation of the present invention, parts irrelevant to the description may be omitted in the drawings, and like reference numerals refer to like parts throughout the specification.

In the whole specification, it will be understood that when an element is referred to as being "connected (joined, contacted, or coupled)" to another element, it can be "directly connected" to the other element or it can be "indirectly connected" to the other element with other elements being interposed therebetween. In addition, it will be understood that when a component is referred to as "comprising or including" any component, it does not exclude other components, but can further comprise or include the other components unless otherwise specified.

The terminology used in the present disclosure is for the purpose of describing particular embodiments only and is not intended to limit the invention. As used in the disclosure and the appended claims, the singular forms "a", "an" and "the" are intended to include the plural forms as well, unless context clearly indicates otherwise. It will be further understood that the terms "comprises/includes" and/or "comprising/including" when used in this specification, specify the presence of stated features, integers, steps, operations, elements, components, and/or groups thereof, but do not preclude the presence or addition of one or more other features, integers, steps, operations, elements, components, and/or groups thereof.

Hereinafter, exemplary embodiments of the present invention will be described in detail with reference to the accompanying drawings.

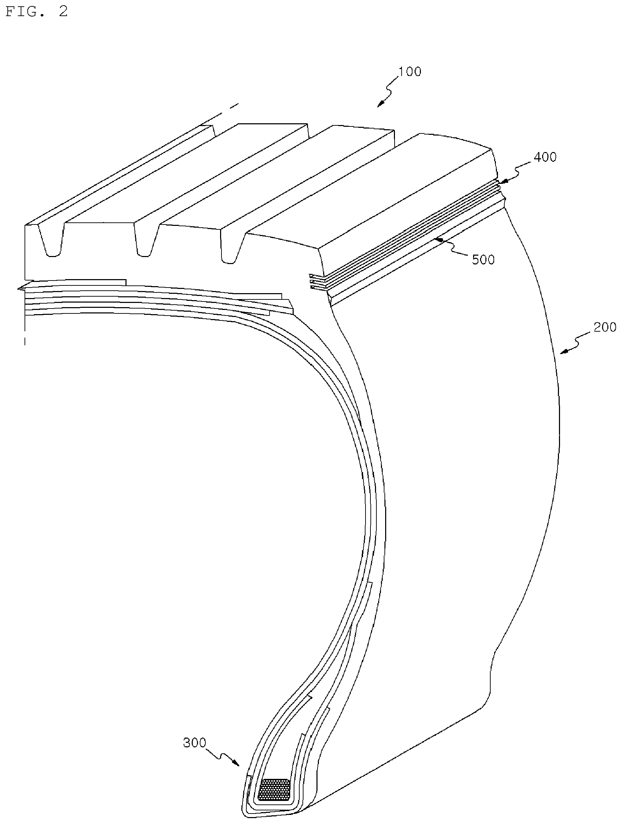

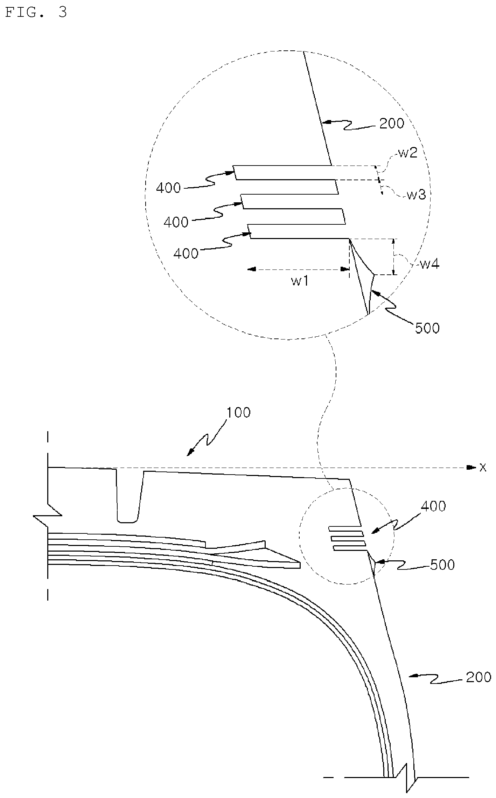

FIG. 2 is a perspective view illustrating a main portion of a pneumatic tire according to an embodiment of the present invention. FIG. 3 is a cross-sectional view illustrating the main portion of the pneumatic tire according to the embodiment of the present invention.

As illustrated in FIGS. 2 and 3, the present invention provides a pneumatic tire including a tread 100, a sidewall 200, and a bead 300. The pneumatic tire includes one or more side ring decoupling grooves 400 formed along the circumference of the tire at the upper portion of the sidewall 200, and the side ring decoupling grooves 400 are formed in a direction parallel with the ground coming into contact with the tire.

The side ring decoupling grooves 400 expand the surface area of the upper portion of the sidewall 200 to improve the heat dissipation performance of the end of the tread 100, namely of a tread shoulder, thereby enhancing the durability of the tire. In addition, it is possible to expect an effect of improving the wear resistance performance of the tread 100 by relieving the contact pressure applied to the shoulder. That is, the side ring decoupling grooves 400 of the present invention perform the function of the sacrificial rib of the conventional decoupling groove and improve heat dissipation performance through an increase in surface area.

The ground comes into contact with the tire in a horizontal direction x while the tire is running, and the depth direction of each of the side ring decoupling grooves 400 is parallel with the horizontal direction x. Preferably, the depth direction of the side ring decoupling groove 400 forms an angle of ±15° with the horizontal direction x according to the shape and structure of the tire.

Only one side ring decoupling groove 400 may be installed, but three side ring decoupling grooves 400 are preferably installed as illustrated in FIGS. 2 and 3. If the number of side ring decoupling grooves is less than three, the surface area is not sufficient, which may lead to a poor heat dissipation effect. On the other hand, if it is more than three, the stiffness of the corresponding part may be excessively weakened. The limitation of the number of side ring decoupling grooves is significant in view of the fact that one of the main purposes of the decoupling groove is to dissipate heat from the shoulder to prevent a decrease in durability due to thermal fatigue.

In the case where one or more side ring decoupling grooves 400 are formed, the distance w3 between the side ring decoupling grooves 400 is preferably equal to or greater than the width w2 of each of the side ring decoupling grooves 400. If the distance w3 between the side ring decoupling grooves 400 is smaller than the width w2 of the side ring decoupling groove 400, the stiffness of the corresponding part may be excessively weakened to cause cracks. On the other hand, if the same number of side ring decoupling grooves 400 is installed, the thermal conductivity of the corresponding part is lowered as the distance w3 between the side ring decoupling grooves 400 beomces small, which may lead to a decrease in heat dissipation efficiency. For this reason, it is configured that the distance w3 between the side ring decoupling grooves 400 is equal to or greater than the width w2 of the side ring decoupling groove 400.

For the above heat dissipation effect, it is preferable that each of the side ring decoupling grooves 400 has a depth w1 of 1 to 10 mm and a width w2 of 1 to 5 mm.

If the depth w1 of the side ring decoupling groove 400 is too great, the stiffness of the upper end of the sidewall may be decreased and cracks may be caused. On the other hand, if the depth w1 of the side ring decoupling groove 400 is too small, it is impossible to expect a sufficient heat dissipation effect since a sufficient surface area is not obtained and to expect a sufficient buffering effect on the upper portion of the sidewall. For this reason, the above numerical limitation is significant.

In addition, the present invention provides a configuration in which a mold distribution protrusion 500 is formed beneath the side ring decoupling grooves 400. The mold distribution protrusion 500 is formed at a portion where a tread mold for forming the tread 100 touches a sidewall mold for forming the sidewall 200 at the time of forming the tire.

The side ring decoupling grooves 400 of the present invention are to enhance the durability of the upper portion of the sidewall 200, i.e., the durability of the shoulder, and are installed at the upper portion of the sidewall 200. However, this installation position is adjacent to a position where the tread mold and sidewall mold as vulcanized molds touch each other. Thus, tension may be applied to the side ring decoupling grooves 400 in the process of separating the molds from each other after the tire is formed, which may lead to breakage such as tearing the side ring decoupling grooves 400.

Therefore, the present invention provides a configuration in which the mold distribution protrusion 500 is formed at a position where the tread mold and sidewall mold as vulcanized molds touch each other to minimize the tension applied to the side ring decoupling grooves 400 in the process of separating the molds from each other.

As illustrated in FIGS. 2 and 3, the mold distribution protrusion 500 preferably has a triangular shape having a vertex in cross section, and more preferably forms a curved surface at both sides leading from the vertex.

To minimize the tension applied to the side ring decoupling grooves 400 at the time of separating the molds from each other, the distance w4 between the center of the mold distribution protrusion 500 and the associated side ring decoupling groove 400 is preferably 4 to 10 mm.

If the distance w4 between the center of the mold distribution protrusion 500 and the side ring decoupling groove 400 is too small, a step is formed to apply rather a larger tension to the side ring decoupling groove 400, which causes cracks. On the other hand, if the distance w4 between the center of the mold distribution protrusion 500 and the side ring decoupling groove 400 is too great, a tension cancellation effect may be less than expected. For this reason, the numerical limitation of the distance w4 between the center of the mold distribution protrusion 500 and the side ring decoupling groove 400 is significant.

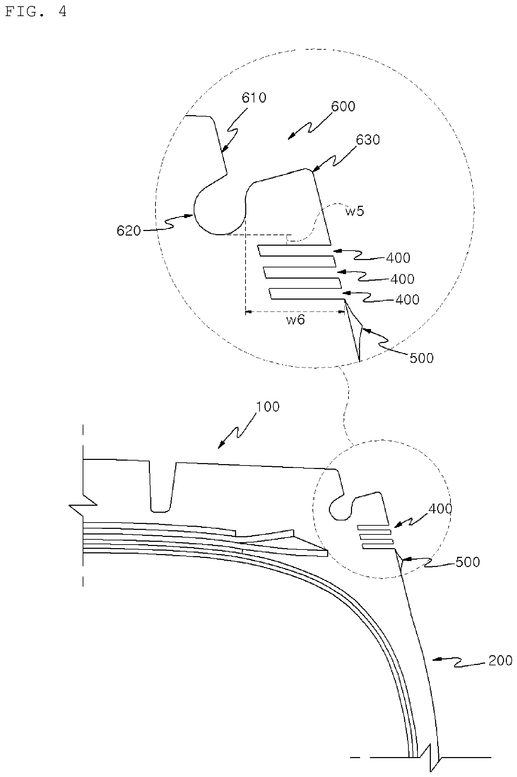

FIG. 4 is a cross-sectional view illustrating a main portion in an implementation example to which a shoulder decoupling groove is additionally applied. In the implementation example of FIG. 4, a shoulder decoupling groove 600 is formed above the side ring decoupling grooves 400, and includes an inlet 610 formed at the outer side thereof and an inner groove 620 formed at the inner side thereof. This configuration provides additional heat dissipation performance of the shoulder, and enables a sacrificial rib 630 formed by the shoulder decoupling groove 600 to further distribute concentration of stress while the tire is running.

In the implementation example of FIG. 4, the side ring decoupling grooves 400 distribute the force applied to the sacrificial rib 630. Thus, the distance w5 between the shoulder decoupling groove 600 and the associated side ring decoupling groove 400 is preferably 0 to 20 mm.

If the distance w5 between the shoulder decoupling groove 600 and the side ring decoupling groove 400 is too great, the side ring decoupling groove 400 does not sufficiently perform the buffering action of the sacrificial rib 630. On the other hand, if the distance w5 between the shoulder decoupling groove 600 and the side ring decoupling groove 400 is less than "0" and the side ring decoupling groove 400 approaches the sacrificial rib 630, the stiffness of the sacrificial rib 630 may be excessively lowered. For this reason, the numerical limitation of the distance w5 between the shoulder decoupling groove 600 and the side ring decoupling groove 400 is significant.

In addition, it is configured that the distance w6 between the outermost end of each of the side ring decoupling grooves 400 and the inner groove 620 is greater than the depth w1 of the side ring decoupling groove 400. This is to prevent the stiffness of the sacrificial rib 630 from being excessively lowered.

In accordance with the embodiment of the present invention, it is possible to expect an effect of simultaneously enhancing the durability and wear resistance performance of the tire by applying the side ring decoupling groove to the upper end of the sidewall of the tire.

Since the side ring decoupling groove enlarges the surface area of the upper portion of the sidewall, it is possible to improve the heat dissipation performance of the end of the tread, namely of the tread shoulder, and enhance the durability of the tire. In addition, it is possible to expect an effect of improving the wear resistance performance of the tread by relieving the contact pressure applied to the shoulder.

The present invention is not limited to the above effects, and it should be understood that the present invention includes all effects which can be inferred from the detailed description of the present invention or the configuration of the invention defined by the appended claims.

The above-mentioned embodiments of the present invention are merely examples, and it will be understood by those skilled in the art that various modifications may be made without departing from the spirit and scope or essential features of the invention. Therefore, it should be understood that the embodiments described above are for purposes of illustration only in all aspects and are not intended to limit the scope of the present invention. For example, each component described in a single form may be implemented in a distributed form, and similarly, components described in the distributed form may be implemented in a combined form.

The scope of the present invention is defined by the appended claims, and it should be construed that all modifications or variations derived from the meaning, scope, and equivalent concept of the claims fall within the scope of the invention.

## Claims

1. A pneumatic tire comprising a tread (100), a sidewall (200), and a bead (300), the pneumatic tire comprising:
one or more side ring decoupling grooves (400) formed along the circumference of the tire at an upper portion of the sidewall (200),
wherein the side ring decoupling grooves (400) are formed in a direction parallel with the ground coming into contact with the tire while the tire runs.

2. The pneumatic tire according to claim 1, wherein the side ring decoupling grooves (400) are three in number.

3. The pneumatic tire according to claim 1, wherein a mold distribution protrusion (500) is formed beneath the side ring decoupling grooves (400).

4. The pneumatic tire according to claim 1, wherein each of the side ring decoupling grooves (400) has a depth (w1) of 1 to 10 mm and a width (w2) of 1 to 5 mm.

5. The pneumatic tire according to claim 1, wherein a distance (w3) between the side ring decoupling grooves (400) is equal to or greater than a width (w2) of each of the side ring decoupling grooves (400).

6. The pneumatic tire according to claim 3, wherein a distance (w4) between the center of the mold distribution protrusion (500) and an associated one of the side ring decoupling grooves (400) is 4 to 10 mm.

7. The pneumatic tire according to any one of claims 1 to 6, wherein a shoulder decoupling groove (600) is formed above the side ring decoupling grooves (400), and the shoulder decoupling groove (600) comprises an inlet (610) formed at its outer side and an inner groove (620) formed at its inner side.

8. The pneumatic tire according to claim 7, wherein a distance (w5) between the shoulder decoupling groove (600) and an associated one of the side ring decoupling grooves (400) is from more than 0 mm to 20 mm.

9. The pneumatic tire according to claim 7, wherein a distance (w6) between the outermost end of each of the side ring decoupling grooves (400) and the inner groove (620) is greater than the depth (w1) of the side ring decoupling groove (400).
